(19) **Europäisches Patentamt**
**European Patent Office**
**Office européen des brevets**

(11) **EP 1 692 014 B1**

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(21) Anmeldenummer: **04802916.9**

(22) Anmeldetag: **10.12.2004**

(51) Int Cl.:
**B60R 16/02** $^{(2006.01)}$

(86) Internationale Anmeldenummer:
**PCT/DE2004/002710**

(87) Internationale Veröffentlichungsnummer:
**WO 2005/056342 (23.06.2005 Gazette 2005/25)**

(54) **VERFAHREN ZUR PULSWEITENMODULIERTEN ANSTEUERUNG EINER MEHRZAHL VON LASTELEMENTEN**

METHOD FOR PULSE WIDTH-MODULATED CONTROL OF A PLURALITY OF LOAD ELEMENTS

PROCEDE DE COMMANDE A MODULATION D'IMPULSIONS EN LARGEUR POUR UNE PLURALITE D'ELEMENTS DE CHARGE

(84) Benannte Vertragsstaaten:
**DE FR**

(30) Priorität: **11.12.2003 DE 10358274**

(43) Veröffentlichungstag der Anmeldung:
**23.08.2006 Patentblatt 2006/34**

(73) Patentinhaber: **Conti Temic microelectronic GmbH**
**90411 Nürnberg (DE)**

(72) Erfinder:
• **JOOS, Uli**
**88149 Nonnenhorn (DE)**
• **SCHNELL, Josef**
**88148 Wasserburg (DE)**

(56) Entgegenhaltungen:
**EP-A- 0 982 194      DE-A1- 4 006 124**
**US-A- 4 176 250      US-A- 5 886 419**

EP 1 692 014 B1

**Beschreibung**

Die Erfindung betrifft ein Verfahren zur pulsweitenmodulierten Ansteuerung einer Mehrzahl von Lastelementen gemäß dem Oberbegriff des Anspruchs 1.

Die Ansteuerung vieler elektrischer Lasten im Kfz (zB. Lampen, Heizwendeln, ...) erfolgt mittels Pulsweitenmodulation (PWM). Hierbei kann die an die Last abgegebene Leistung geregelt oder gesteuert werden, wobei die Verluste in der Ansteuerelektronik durch den Schaltbetrieb klein gehalten werden können.

Bei der pulsweitenmodulierten Ansteuerung von Lasten im KfZ werden jedoch über die Batterie- und Lastzuleitungen elektromagnetische Felder emittiert, die den Rundfunkempfang im Fahrzeug stören können.

Deshalb wurden hierzu in verschiedenen Normen (IEC, ISO, CISPR) Grenzwerte festgelegt, die die Beeinflussung des Rundfunkempfängers in den entsprechenden Spektren auf ein erträgliches Maß reduzieren.

Die Unterdrückung der Wechselströme auf den Zuleitungen erfolgt gewöhnlich mit Tiefpaßfiltern (LC) in den Eingangsleitungen. Die Größe und auch die Kosten der Filter richten sich nach Strombelastbarkeit, benötigte Dämpfung, Güte und Grenzfrequenz. Die PWM wird in KfZ-Steuergeräten normalerweise über für eine Mehrzahl von Lastelementen durch in den Microcontroller integrierte Timer-Module erzeugt, wobei alle PWM-Ausgänge zum selben Zeitpunkt einschalten und je nach PWM Tastverhältnis zu verschiedenen Zeitpunkten ausschalten.

Dieses Verfahren hat den Nachteil, daß dem Netz ein sehr großer Wechselstrom entnommen wird und deshalb hohe Anforderungen an die verwendeten Filter, insbesondere die Speicherkondensatoren, zu stellen sind.

Aus EP-A2-0 982 194, als nächstliegender Stand der Technik angesehen, ist ein Verfahren zur Ansteuerung elektrischer Verbraucher in einem Bordnetz, beispielsweise eines Kraftfahrzeuges, bekannt, bei dem der aktuelle Zustand der elektrischen Verbraucher ständig überwacht wird und deren Ansteuerung durch mindestens eine Steuereinheit erfolgt. Mit dem Verfahren soll unten allen Betriebsbedingungen des Kraftfahrzeuges der bestmögliche Fahrkomfort gewährleistet werden. Es wird eine Klassifizierung aller elektrischen Verbraucher des Systems in Strategiegruppen, sowie eine Festlegung von Steueralgorithmen und Prioritäten für die einzelnen Strategiegruppen, die Speicherung der Klassifizierung und der Steueralgotithmen der Strategiegruppen in einem Speicher vorgenommen. Außerdem erfolgt eine Überwachung aller elektrischen Verbraucher durch die Steuereinheit und eine Speicherung der erfaßten Daten in dem Speicher, sowie die gleichzeitige oder zeitversetzte Ansteuerung der elektrischen Verbraucher durch die Steuereinheit nach Bewertung der Schaltanforderungen übergeordneter elektrischer Verbraucher und Freigabe der Ansteuerung entsprechend festgesetzter Algorithmen.

Aus US-A-4176250 ist ein Multiplexsystem mit Pulsbreitenmodulation zum Einsatz in einem Automobil bekannt. Das System schließt eine Senderbaugruppe mit ein, die in der linken vorderen Tür gelegen ist, die Informationen den Empfängerbausteinen übermittelt, die durch eine Datenleitung zusammengeschaltet werden und in den Passagiertüren und unter dem vorderen Sitz angeordnet sind. Der Empfänger in der rechten vorderen Tür ist derart ausgelegt, daß Informationen an die angeschlossenen Systeme geliefert werden können. Eine Störung der einzelnen Systeme untereinander wird durch eine Prioritäts-Logik vermieden.

Aufgabe der Erfindung ist es, ein Verfahren der eingangs genannten Art aufzuzeigen, durch welches die Störungen weiter verringert werden können.

Diese Aufgabe wird durch die Merkmale des Anspruchs 1 gelöst. Vorteilhafte Weiterbildungen sind den Unteransprüchen zu entnehmen.

Der Erfindung liegt die Verteilung mehrerer PWM-Kanäle innerhalb des Zeitfenster der Schaltfrequenz zugrunde. Es werden also die Lastelemente zeitlich versetzt angesteuert, d.h. insbesondere auch die Einschaltflanken für die einzelnen Lastelemente sind zeitversetzt und es addieren sich somit auch nicht deren hochfrequente elektromagnetische Störungen, sondern verteilen sich über die Zeit.

Insbesondere bei Versorgung der Lastelemente aus einer gemeinsamen Versorgungsleitung, wie in Kraftfahrzeugen üblich, ist dies ganz entscheidend. Das Verfahren soll insbesondere auch für ohmsche Lastelementen, bspw. für die zentrale Steuerung von Leuchtmitteln wie Lampen oder LEDs, in jeweils einem elektrisch unabhängigen Laststromkreis angewendet werden. Gerade auch im Kfz-Bereich erfolgt vorzugsweise die Ansteuerung von einem gemeinsamen Steuergerät aus pulsweitenmoduliert mit einer einheitlichen Pulsbreite, so daß die Lastelemente jeweils nur mit individuellem Puls-Pausenverhältnis angesteuert werden, wobei dann die Lastelemente innerhalb der Pulsbreite phasenversetzt angesteuert werden.

Dabei werden die Einschaltzeitpunkte innerhalb der Taktperiode vorzugsweise so verteilt, daß

- der Wechselanteil und damit die Dämpfung minimal ist

- die resultierende Frequenz (=Grundwelle) des Eingangsstromes möglichst hoch und damit die benötigte Grenzfrequenz bzw. Dämpfung möglichst hoch ist.

Dies kann durch Zuordnung der Einschaltzeitpunkte zu festen Phasenbeziehungen erfolgen.

Die Lastelemente werden vorzugsweise pulsweitenmoduliert mit einer einheitlichen Pulsbreite, jeweils individuellem Puls-Pausenverhältnis, jedoch innerhalb der Pulsbreite zueinander phasenversetzt angesteuert werden. Dadurch wird die Ansteuerung mit einem gemeinsamen Steuergerät für mehrere Lastelemente aus einem gemeinsamen Systemtakt möglich, wodurch sich die Phasenlage der einzelnen Lastelemente einfach einstellen und auch bei in sich instabilem Systemtakt recht genau halten lässt.

Die Lastelemente werden also vorzugsweise von einer gemeinsamen Steuereinheit mit einem gemeinsamen Systemtakt phasenversetzt angesteuert.

Die Lastelemente werden vorzugsweise mit jeweils annähernd gleichem Phasenversatz innerhalb einer Pulsbreite angesteuert, zumindest bei Lastelementen mit annähernd gleicher Leistungsaufnahme, da dieser gleiche Phasenversatz besonders einfach realisierbar ist.

Diese Ansteuerung lässt sich besonders einfach durch einen gemeinsamen Zähler realisieren, in welchem der gemeinsame Systemtakt bis zu einem vorgegebenen Zählerendwert hochgezählt wird, wobei für jedes Lastelement ein individueller Startwert und ein individueller Endwert aus dem Zählbereich des Zählers vorgegeben sind.

Die Startwerte der Lastelemente weichen entsprechend der Phasenlage der Lastelemente voneinander ab und die Endwerte für die jeweiligen Lastelemente sind entsprechend dem Puls-Pausenverhältnis bestimmt.

Jedes Lastelement wird dabei für die Zeitdauer zwischen dem jeweiligen Start- und Endwert bestromt.

Bevorzugter Weise werden für unterschiedliche Betriebssituationen unterschiedliche Phasenverschiebungen der einzelnen Lastelemente zueinander vorgegeben.

Es werden dazu beispielsweise zumindest einer der folgenden Parameter berücksichtigt:

- die aktuell anzusteuernden Lastelemente, insbesondere bei wechselnder Zuschaltung einzelner Lastelemente, jedoch an sich konstantem nur von der Versorgungsspannung abhängigem Pulsweitenverhältnis der einzelnen Lastelemente, wobei insbesondere bei annähernd gleicher Leistungsaufnahme es ausreichend sein kann, nur die Anzahl der aktuell anzusteuernden Lastelemente zu erfassen oder

- Pulsweite der aktuell anzusteuernden Lastelemente oder

- elektrische Leistungsaufnahme bzw. dazu proportionale Größe der aktuell anzusteuernden Lastelemente zueinander oder

- Oberwellenanteil auf der gemeinsamen Versorgungsleitung zeitlich über die Ansteuerung aller Lastelemente hinweg.

Die Ansteuerschaltung zur Durchführung dieses Verfahrens weist somit vorzugsweise zumindest einem gemeinsamen Systemtaktgeber und einem Speicherbereich für jedes Lastelement auf, in welchem die Pulsweite sowie die Phasenlage des jeweiligen Lastelements abgespeichert sind.

Vorzugsweise ist ein gemeinsamer Zähler vorgesehen, welcher den Systemtakt bis zu einem vorgegebenen Zählerendwert hochgezählt. Pulsweite und Phasenlage für jedes Lastelement werden in Form jeweils eines Startwerts und Endwerts für die phasenversetzte pulsweitenmodulierte Ansteuerung jedes Lastelements individuell abgespeichert.

Startwert und Endwert beziehen sich dabei auf den Zahlenbereich des gemeinsamen Zählers, wobei der Zähler mit Überlauf bzw. Rücksetzung arbeitet und ein Endwert mit einem Zahlenwert kleiner als der Startwert somit zeitlich bei Erreichen des Wertes nach dem Überlauf bzw. Rücksetzung erreicht wird.

Für jedes Lastelement ist daher nur ein Vergleicher erforderlich, welcher den Zählerstand mit dem Start- und Endwert vergleicht und in Abhängigkeit davon jeweils einen Schalter im Stromkreis zum Lastelement ansteuert.

Zusätzlich ist vorzugsweise ein Reset-Eingang am Zähler vorgesehen ist, durch den die Ansteuerung für alle Lastelemente gemeinsam synchronisiert werden kann, in dem der Zähler rückgesetzt und neu gestartet wird.

Vorzugsweise ist ein Speicherbereich vorgesehen, in dem für unterschiedliche Betriebssituationen unterschiedliche Phasenlagen der einzelnen Lastelemente zueinander hinterlegt sind und Mittel zur Erkennung der aktuellen Betriebssituation und Auswahl jener der aktuellen Betriebssituation zugeordneten Phasenlage vorgesehen sind.

Dazu ist denkbar, in der gemeinsamen Versorgungsleitung eine Messanordnung zur Detektion der Oberwellenanteile vorzusehen. Dadurch wird es möglich, den Oberwellenanteil zu bewerten, bspw. mit einem Schwellwert zu vergleichen und bei einem den Schwellwert übersteigenden Oberwellenanteil dies als eine Veränderung der Betriebssituation zu erkennen und eine Veränderung der Phasenlagen vorzunehmen. Man könnte sich sogar einen selbst regulierenden Regelkreis denken, der die Phasenlagen der Lastelemente zueinander nach einem vorgegebenen Schema so lange ändert, bis die Oberwellenanteile wieder unter die Schwelle sinken.

Die Erfindung soll nachfolgend anhand von Ausführungsbeispielen und Figuren näher erläutert werden. Es zeigen:

Fig. 1 PWM Ansteuerung von 4 Lastelementen nach dem Stand der Technik mit einem Steuergerät und Skizze der summarischen Belastung

Fig. 2 PWM-Ansteuerung mit Phasenversatz und Skizze der summarischen Belastung

Fig. 3 Beispiel einer Schaltungsanordnung zur Durchführung des Verfahrens

Fig.4 Ansteuerung von 16 Lastelementen mit einem Duty Cycle von 50% gemäß dem Stand der Technik ohne Phasenversatz und resultierender Gesamtspannungsverlauf

Fig.5 Variante einer Ansteuerung von 16 Lastelementen mit einem Duty Cycle von 50% mit vorgegebenem Phasenversatz und resultierender Gesamtspannungsverlauf

Fig.6 Variante einer phasenverschobene Ansteuerung bei Aktivierung von 9 aus 16 Lastelementen bei Duty Cycle von 50%

Fig.7 Variante einer phasenverschobene Ansteuerung bei Aktivierung von 9 aus 16 Lastelementen bei Duty Cycle von 60%

Fig.8 Messung des Oberwellenanteils im Versorgungspfad

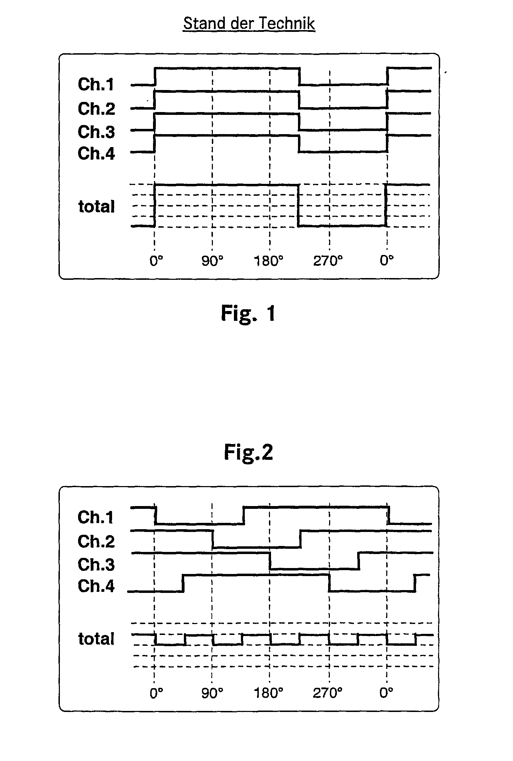

Fig. 1 zeigt den Verlauf mit einer herkömmlichen Ansteuerung, bei der alle Lastelemente über die hier 4 gezeigten Ansteuerkanäle (Ch.1-4) zu einem Zeitpunkt eingeschaltete und entsprechend dem individuellen Puls-Pausenverhältnis jeweils abgeschaltet werden. Dies führt aufgrund der Überlagerung zu starken hochfrequenten Störungen. Diese Ansteuerung ist zwar technisch einfach mittels eines Zählers realisierbar, weist jedoch damit auch erhebliche Nachteile auf.

Demgegenüber zeigt Fig. 2 eine erfindungsgemäße mehrphasige Ansteuerung. Die Anzahl der Phasen wird dabei gleich der Anzahl der PWM-Signale gewählt, d.h. zwischen den Kanälen besteht jeweils eine Annäherung gleiche Phasenverschiebung der Anstiegsflanke, hier von 360 Grad / 4 = je 90 Grad.

Durch graphische Addition gleichgewichteter PWM Signale kann die Verbesserung im Eingangswechselstrom hergeleitet werden.

Im vorliegenden Beispiel wird

- die Frequenz mit der Anzahl der PWM Signal multipliziert

- der Wechselanteil durch die Anzahl der PWM Signale dividiert.

Das Verfahren ist für beliebige Anzahl, Kombination und Gewichtung anwendbar, besonders vorteilhaft ist das Verfahren für binäre Stufung und Phasenanzahl.

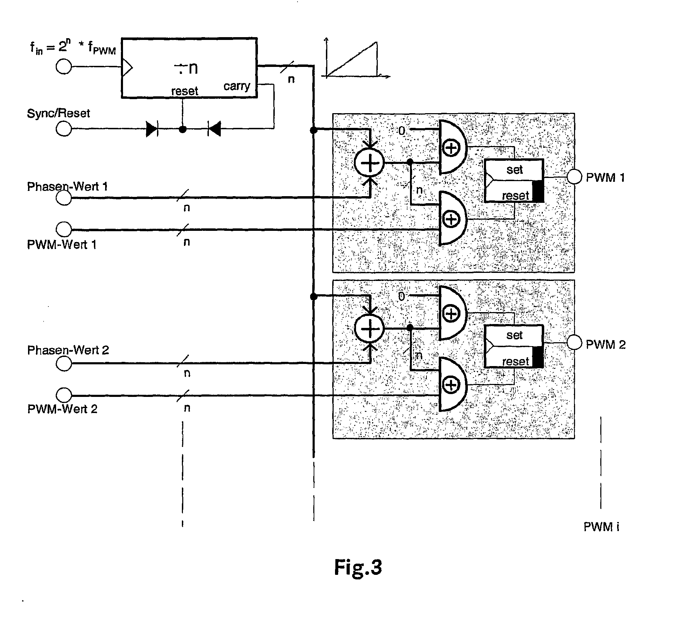

Ein Ausführungsbeispiel für eine mehrphasige Anordnung, welche ebenfalls mit nur einem Zähler auskommt, zeigt das Beispiel in Fig. 3.

Alle PWM-Signale werden von einem Eingangstakt abgeleitet, wobei jeweils PWM Wert und - Phasenlage programmiert werden können. Das-PWM Signal selbst wird über digitale Vergleicher (EXOR) und ein nachgeschaltetes Latch (RS-Flip-Flop) gewonnen. Dabei wird das Latch immer

- zum Start der um den Phasewert verzögerten Periode, gesetzt.

- um den PWM Wert später zurückgesetzt.

Die Programmierung der Phasenlage erfolgt sehr einfach durch eine Addition des Phasenwertes zum Ausgangswert des Zählers. Deshalb ist eine binäre Stufung der Phasenlage besonders einfach zu realisieren.

Über den Sync/Reset-Eingang können mehrere PWM-Module durch Zurücksetzen des Zählers auf eine Phasenlage synchronisiert werden.

Dadurch wird eine Reduktion der elektromagnetischen Abstrahlung in den Rundfunkfrequenzbereichen von pulsweitenmodulierten Ansteuerungen durch mehrphasige Ansteuerung mehrerer PWM Signale erreicht. Die Realisierung der Mehrphasigkeit kann durch Hardware oder Software erfolgen.

Es erfolgt eine Aufteilung der verschiedenen PWM-Signale auf verschiedene Phasenbeziehungen innerhalb der Taktperiode zur optimalen Ausbildung des Eingangswechselstromes des Elektronik-Moduls mit minimaler Amplitude bzw. maximaler Frequenz. Damit kann der Aufwand für die notwendigen Eingangsfilter reduziert werden.

Nachfolgend soll anhand von Ausführungsbeispielen noch eingehender die Variation der Phasenlage in Abhängigkeit von der Betriebssituation erläutert werden.

Eingangs wurde bereits eine Möglichkeit beschrieben, bei einer variierenden Anzahl n von Lastelementen mit annähernd gleich großer elektrischer Leistungsaufnahme die Phasenlage als Quotient von 360 Grad/n festzulegen. Eine solche Zerlegung ist jedoch mit einem binären Zähler nicht immer einfach abbildbar und insbesondere die Zuschaltung und Abschaltung einzelner Lastelemente bei variierender Anzahl von Lastelementen schwierig. Daher soll nachfolgend noch eine Alternative vorgestellt werden.

Die in diesem Beispiel angewendete Bildungsvorschrift zur Definition der Einschaltphase kann folgendermaßen hergeleitet werden:

Die Eingänge schalten jeweils zum Zeitpunkt $\phi = \dfrac{Dezimalwert - Phasenlage}{2^n} \cdot 360°$, wobei die Einschaltreihenfolge als dezimale Zahl aus dem Wertebereich 0 bis $2^n - 1$, d.h. in diesem Beispiel bis 15 dargestellt ist. Der Wert 0 entspricht 0 Grad Phasenlage und jeder Schritt 22,5 Grad Phasenlage bzw. einem entsprechenden Zählerwert.

| Anzahl der aktiven Ausgänge minus 1 | bspw. Ausgang | Dezimalwert der Phasenlage | D3 | D2 | D1 | D0 |
|---|---|---|---|---|---|---|
| 0 | A0 | 0 | 0 | 0 | 0 | 0 |
| 1 | A8 | 8 | 1 | 0 | 0 | 0 |
| 2 | A4 | 4 | 0 | 1 | 0 | 0 |
| 3 | A12 | 12 | 1 | 1 | 0 | 0 |
| 4 | A2 | 2 | 0 | 0 | 1 | 0 |
| 5 | A10 | 10 | 1 | 0 | 1 | 0 |
| 6 | A6 | 6 | 0 | 1 | 1 | 0 |
| 7 | A14 | 14 | 1 | 1 | 1 | 0 |
| 8 | A1 | 1 | 0 | 0 | 0 | 1 |
| 9 | A9 | 9 | 1 | 0 | 0 | 1 |
| 10 | A5 | 5 | 0 | 1 | 0 | 1 |
| 11 | A13 | 13 | 1 | 1 | 0 | 1 |
| 12 | A3 | 3 | 0 | 0 | 1 | 1 |
| 13 | A11 | 11 | 1 | 0 | 1 | 1 |
| 14 | A7 | 7 | 0 | 1 | 1 | 1 |
| 15 | A15 | 15 | 1 | 1 | 1 | 1 |

Man erkennt, daß zur Ermittlung der Einschaltreihenfolge die Bits der Binärzahl in umgekehrter Reihenfolge zu Ihrer binären Wertigkeit verwendet werden müssen:

Bit 3 ==> Reihenfolge-Bit 0
Bit 2 ==> Reihenfolge-Bit 1
Bit 1 ==> Reihenfolge-Bit 2
Bit 0 ==> Reihenfolge-Bit 3
Die Reihenfolge ergibt sich demnach zu:

$$Dezimalwert - Phasenlage = D3 \cdot 2^0 + D2 \cdot 2^1 + D1 \cdot 2^2 + D0 \cdot 2^3;$$

Jedes Lastelement bzw. jeder zu aktivierende Ausgang wird dabei entsprechend der zeitlichen Reihenfolge der Aktivierung eingetragen und erhält die dieser Position in der Reihenfolge zugewiesene Phasenlage.

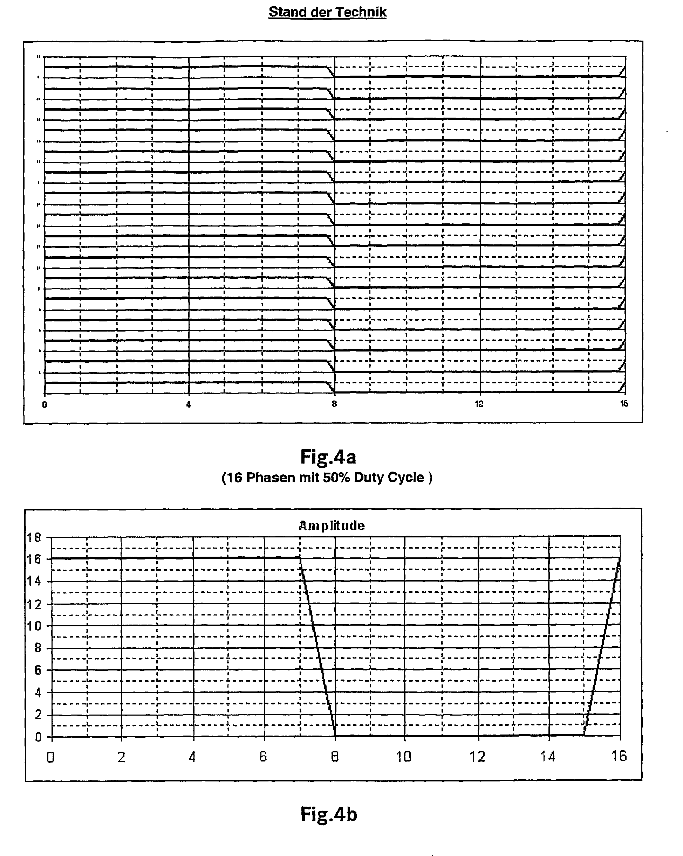

Dies soll nachfolgend anhand von maximal 16 parallel aus einem Versorgungsbordnetz ansteuerbaren Lastelementen erläutert werden. Fig.4 skizziert zunächst eine übliche Ansteuerung gemäß dem Stand der Technik ohne Phasenversatz mit einem Duty Cycle von 50% und den resultierenden Gesamtspannungsverlauf, der entsprechend starke Schwankungen und somit auch Oberwellen aufweist. Die Schwankungen sind hier auf Einheitswerte normiert, wobei der Wert 1 einem Lastelement entspricht.

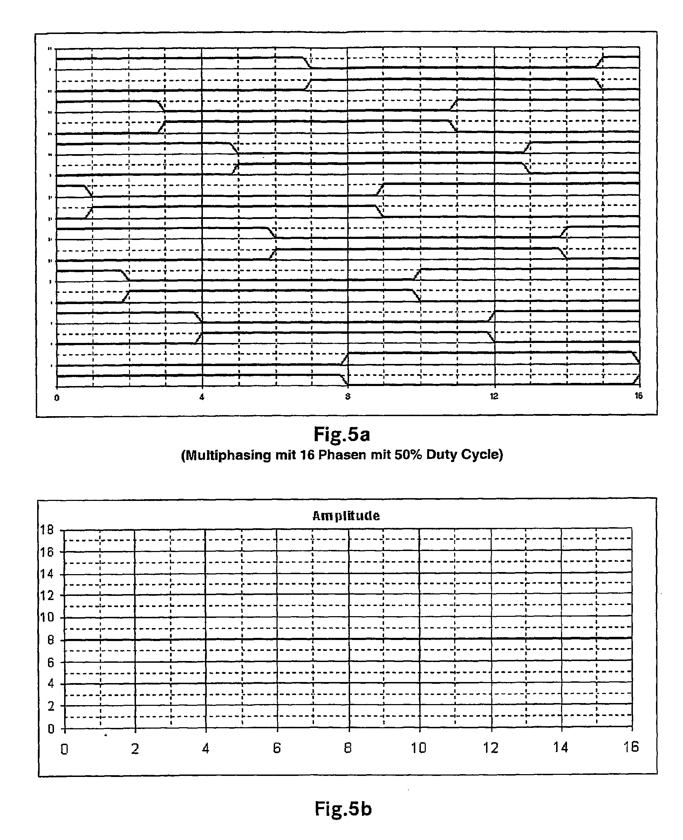

Demgegenüber zeigt nun Fig.5 die eingangs erwähnte Variante einer Ansteuerung aller 16 Lastelemente mit einem Duty Cycle von 50% mit einem gemäß dieser binären Bildungsvorschrift vorgegebenem Phasenversatz und den idealer Weise resultierenden konstanten Gesamtspannungsverlauf.

Von unten nach oben sind in Fig. 5 in der Reihenfolge der Zuschaltung die einzelnen zugeschalteten Ausgänge und entsprechenden Schaltflanken, d.h. der zuerst aktivierte Ausgang A0 wird zum Zeitpunkt 0 aktiv, der zweitfolgende Ausgang A8 dazu invers beim Zeitpunkt 8 und so weiter.

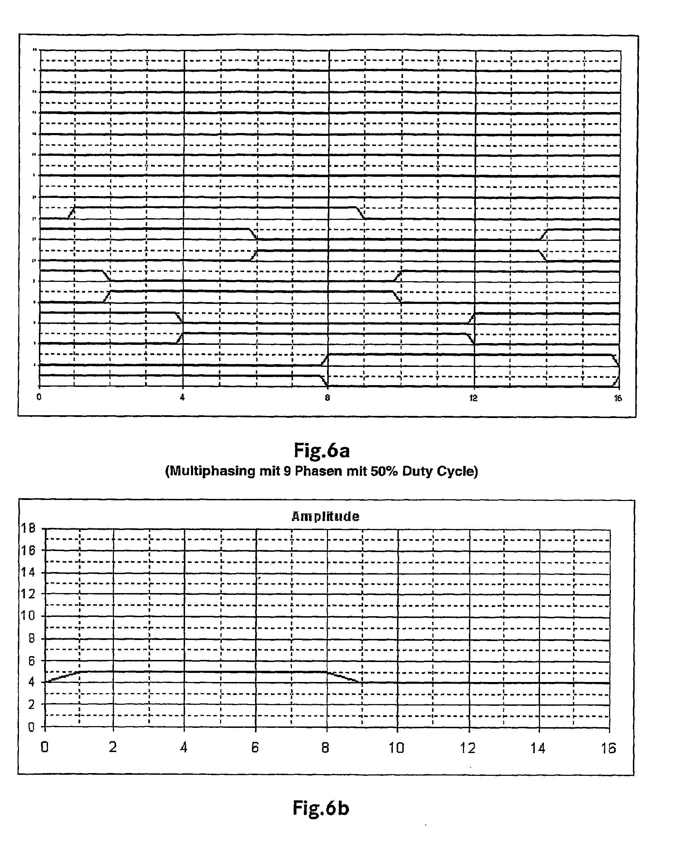

Fig.6 skizziert nun bei dieser Variante einer phasenverschobenen Ansteuerung die Situation bei Aktivierung von 9 aus 16 Lastelementen bei einem Duty Cycle von 50%. Aufgrund der jeweils paarweisen Inversion tritt bei ungeradzahliger Anzahl von Lastelementen eine entsprechende Schwankung in der Belastung auf dem Versorgungsbordnetz auf, welche jedoch von der Schwankungshöhe nur um eine Einheit bezogen auf die Leistungsaufnahme aller Lastelemente schwankt.

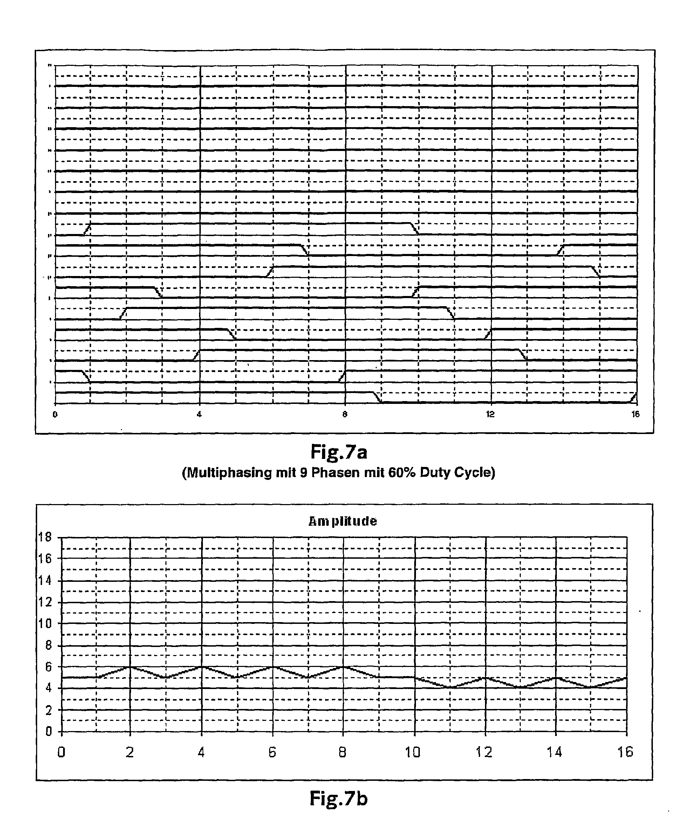

Fig.7 skizziert nun das Ansteuerschema dieser Variante einer phasenverschobene Ansteuerung bei Aktivierung von 9 aus 16 Lastelementen bei einem Duty Cycle von 60%. Duty Cycle von größer 50 % bedingen eine Überlappung der aktiven Phasen aufeinanderfolgend aktivierter Lastelemente und führen somit zu einer Schwankung in der Gesamtbelastung. Durch die situationsangepasste Vorgabe der Phasenlage kann jedoch die Schwankung auf höchstens 2 Einheitswerte bei 16 möglichen Lastelementen beschränkt werden.

Fällt eines oder mehrere bisher aktive Lastelemente weg, werden diese also ausgeschaltet, wird vorzugsweise eine Neuzuordnung der Phasen wieder analog zu dem vorgenannten Bildungsschema erfolgen.

Diese Varianten der Ansteuerung gingen bisher von Lastelementen mit annähernd gleicher Leistungsaufnahme aus. Liegen Lastelemente mit deutlich unterschiedlicher Leistungsaufnahme vor oder sind die Dyty Cycle der einzelnen Lastelemente abweichend voneinander, müssen entsprechend angepasste Phasenschemata hinterlegt werden.

Daher ist es besonders bevorzugt, eine universelle Schaltungsanordnung aufzubauen, bspw. in einem ASIC zu integrieren, in dem eine Mehrzahl unterschiedlicher Phasenschemata frei programmierbar sind und somit je nach Anwendungssituation diese Universalbaugruppe entsprechend den denkbaren Betriebssituationen und dabei auftretenden Lastverhältnissen programmiert werden. Ist die Leistungsaufnahme der Lastelemente über die Zeit zumindest annähernd konstant, reicht es aus, die der Ansteuerschaltung eh zugeführte Information über die aktuell anzusteuernden Lastelemente und deren PWM-Verhältnis auszuwerten und bspw. in einer Look-up-Tabelle ein dazu zugeordnetes Phasenschema zu aktivieren.

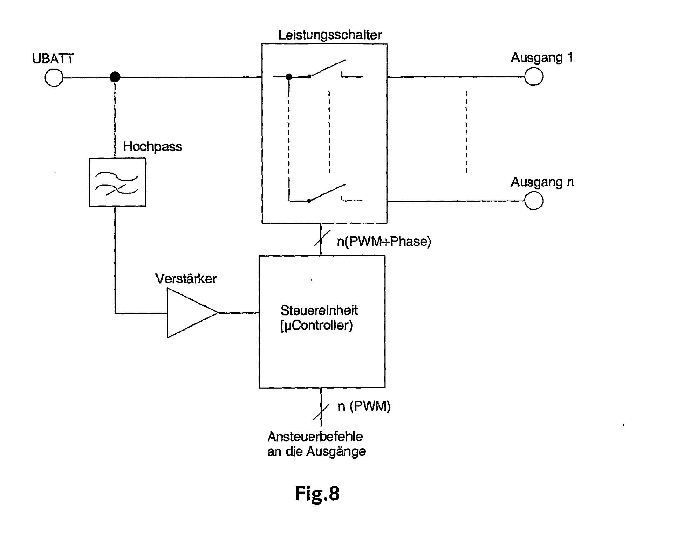

Fig.8 skizziert nun noch die Messung des Oberwellenanteils im Versorgungspfad. Der Wechselspannungsanteil auf der Eingangsleitung wird über einen Hochpaß der Steuereinheit zugeführt, die die Leistungsschalter ansteuert. Alternativ könnte ein Shuntwiderstand in Serie in die Eingangsleitung eingeführt werden und über einen Differenzverstärker die Spannung über diesem Shuntwiderstand abgegriffen und dem Hochpaß zugeführt werden. Die Steuereinheit kann dabei jeweils den Wechselanteil als Auswirkung des angelegten Phasenschemas direkt ermitteln. Je nach Ausgangsstrom, Anzahl der eingeschalteten Phasen und Pulsweite der einzelnen Ausgänge kann das Phasenschema solange verändert werden bis sich ein minimaler Wechselanteil auf der Eingangsleitung ergibt. Die Veränderung des Phasenschemas kann mittels vorgegebenen Phasenschemata oder durch definiertes Durchstimmen oder dergleichen erfolgen.

**Patentansprüche**

1. Verfahren zur pulsweitenmodulierten Ansteuerung einer Mehrzahl von Lastelementen, wobei die Lastelemente jeweils zueinander zeitlich versetzt angesteuert werden, **dadurch gekennzeichnet, daß**

   - die Lastelemente von einer gemeinsamen Steuereinheit mit einem gemeinsamen Systemtakt phasenversetzt angesteuert werden, und
   - für jedes Lastelement ein Startwert und ein Endwert vorgegeben ist, wobei
   - die Startwerte der Lastelemente voneinander abweichen,
   - die Endwerte der Lastelemente entsprechend dem Puls-Pausenverhältnis bestimmt sind und
   - jedes Lastelement für die Zeitdauer zwischen dem jeweiligen Start- und Endwert bestromt wird.

2. Verfahren nach Anspruch 1, **dadurch gekennzeichnet, daß** die Lastelemente vorzugsweise ohmsche Lastelementen in jeweils einem elektrisch unabhängigen Laststromkreis sind und aus einer gemeinsamen Versorgungsleitung, insbesondere einem Kraftfahrzeugbordnetz, versorgt werden.

3. Verfahren nach Anspruch 1, **dadurch gekennzeichnet, daß** ein gemeinsamer Systemtakt in einem gemeinsamen Zähler bis zu einem vorgegebenen Zählerendwert hochgezählt wird.

**4.** Verfahren nach einem der vorangehenden Ansprüche, **dadurch gekennzeichnet, daß** für unterschiedliche Betriebssituationen unterschiedliche Phasenverschiebungen der einzelnen Lastelemente zueinander vorgegeben werden.

**5.** Verfahren nach einem der vorangehenden Ansprüche , **dadurch gekennzeichnet, daß** zumindest einem der folgenden Parameter erfasst wird:

- Anzahl der aktuell anzusteuernden Lastelemente oder
- Pulsweite der aktuell anzusteuernden Lastelemente oder
- elektrische Leistungsaufnahme bzw. dazu proportionale Größe der aktuell anzusteuernden Lastelemente zueinander oder
- Oberwellenanteil auf der gemeinsamen Versorgungsleitung zeitlich über die Ansteuerung aller Lastelemente hinweg.

**6.** Verfahren nach einem der vorangehenden Ansprüche, **dadurch gekennzeichnet, daß** Leuchtmittel, insbesondere Lampen oder LEDs, vorzugsweise in einem Kraftfahrzeug, angesteuert werden.

**7.** Ansteuerschaltung zur Durchführung des Verfahrens nach einem der Ansprüche 1 bis 6 bestehend aus:

- einem gemeinsamen Systemtaktgeber und
- einem Speicherbereich für jedes Lastelement, in welchem die Pulsweite sowie die Phasenlage des jeweiligen Lastelements abgespeichert sind.

**8.** Ansteuerschaltung nach Anspruch 7, **dadurch gekennzeichnet, daß**

- Startwert und Endwert für die phasenversetzte pulsweitenmodulierte Ansteuerung abgespeichert sind,
- einem gemeinsamen Zähler, welchen den Systemtakt bis zu einem vorgegebenen Zählerendwert hochgezählt,
- für jedes Lastelement einen Speicherbereich, in welchem Startwert und Endwert für die phasenversetzte pulsweitenmodulierte Ansteuerung abgespeichert sind und
- für jedes Lastelement einen Vergleicher und einen Schalter, welcher den Zählerstand mit dem Start- und Endwert vergleicht und in Abhängigkeit davon jeweils den Schalter im Stromkreis zum Lastelement ansteuert.

**9.** Ansteuerschaltung nach Anspruch 8, **dadurch gekennzeichnet, daß** ein Reset-Eingang am Zähler vorgesehen ist, durch den die Ansteuerung für alle Lastelemente gemeinsam synchronisiert werden kann, in dem der Zähler rückgesetzt und neu gestartet wird.

**10.** Ansteuerschaltung nach einem der Ansprüche 7 bis 10 zur Durchführung eines Verfahrens nach einem der Ansprüche 5 oder 6, **dadurch gekennzeichnet, dass**

- ein Speicherbereich vorgesehen ist, in dem für unterschiedliche Betriebssituationen unterschiedliche Phasenlagen der einzelnen Lastelemente zueinander hinterlegt sind und - Mittel zur Erkennung der aktuellen Betriebssituation und Auswahl jener der aktuellen Betriebssituation zugeordneten Phasenlage vorgesehen sind.

**11.** Ansteuerschaltung nach Anspruch 10, **dadurch gekennzeichnet, daß** ein Speicherbereich vorgesehen ist, in denen eine Mehrzahl unterschiedlicher Phasenlagen der einzelnen Lastelemente zueinander über eine Schnittstelle programmierbar ist.

**12.** Ansteuerschaltung nach einem der vorangehenden Ansprüche, **dadurch gekennzeichnet, daß** eine Messanordnung zur Detektion der Oberwellenanteile in der gemeinsamen Versorgungsleitung vorgesehen ist.

**Claims**

**1.** Method for driving a plurality of load elements by pulse-width modulation, wherein the individual actions of driving one of the load elements are time-shifted relative to each other, **characterized in that**

- the load elements are driven by a common control unit with a common system cycle in a phase-shifted manner; and

- an initial value and a final value are predetermined for each of the load elements, wherein
- the initial values of the load elements differ from each other,
- the final values of the load elements are determined according to the pulse-pause ratio, and
- each load element is supplied with current for the period between the respective initial and final values.

2. Method according to claim 1, **characterized in that** the load elements are preferably ohmic load elements arranged in an electrically independent load circuit each, and that they are supplied by a common supply line, in particular by a supply system of a motor vehicle.

3. Method according to claim 1, **characterized in that** in a common counter, a common system cycle is counted up to a predetermined final counter value.

4. Method according to any one of the preceding claims, **characterized in that** different phase shifts of the individual load elements relative to each other are predetermined for different operating conditions.

5. Method according to any one of the preceding claims, **characterized in that** at least one of the following parameters is detected:

- the number of the load elements to be driven currently, or
- the pulse width of the load elements to be driven currently, or
- the electrical power consumption, or the parameter proportional thereto, of the load elements to be driven currently, relative to each other, or
- the harmonic wave component on the common supply line throughout the period that covers the actions of driving all load elements.

6. Method according to any one of the preceding claims, **characterized in that** luminous means, in particular lamps or LEDs, preferably in a motor vehicle, are driven.

7. Control circuit for carrying out the method according to any one of claims 1 to 6, consisting of:

- a common system clock generator, and
- a memory area for each of the load elements, in which the pulse width and the phase position of the respective load element are stored.

8. Control circuit according to claim 7, **characterized in that**

- the initial value and the final value for phase-shifted pulse-width-modulated driving are stored,
- a common counter is provided that counts the system cycle up to a predetermined final counter value,
- for each of the load elements, a memory area is provided, in which the initial value and the final value for phase-shifted pulse-width-modulated driving are stored, and
- for each of the load elements, a comparator and a switch are provided, wherein the comparator compares the count of the counter with the initial value and the final value and in each case drives the switch in the electric circuit towards the load element on the basis of this comparison.

9. Control circuit according to claim 8, **characterized in that** a reset input is provided at the counter, by means of which the driving for all load elements can be jointly synchronized by resetting and restarting the counter.

10. Control circuit according to any one of claims 7 to 10 for carrying out a method according to any one of claims 5 or 6, **characterized in that**

- a memory area is provided, in which different phase positions of the individual load elements relative to each other are stored for different operating conditions, and
- means are provided for recognizing the present operating condition and selecting the phase position that is assigned to the present operating condition.

11. Control circuit according to claim 10, **characterized in that** a memory area is provided, in which a plurality of different phase positions of the individual load elements relative to each other are programmable via an interface.

**12.** Control circuit according to any one of the preceding claims, **characterized in that** a measurement setup is provided for detecting the harmonic wave components in the common supply line.

**Revendications**

**1.** Procédé de commande à modulation de durée d'impulsions d'une pluralité d'éléments de charge, les éléments de charge étant commandés respectivement avec un décalage dans le temps les uns par rapport aux autres, **caractérisé en ce que**

- les éléments de charge sont commandés, avec un décalage de phases, par une unité de commande commune avec une cadence de système commune, et
- **en ce que**, pour chaque élément de charge, une valeur de début et une valeur de fin sont prédéfinies,
- les valeurs de début des éléments de charge différant les unes des autres,
- les valeurs de fin des éléments de charge étant déterminées en fonction du rapport impulsion-pause et
- chaque élément de charge étant alimenté en courant pendant la durée de temps entre la valeur de début et la valeur de fin respectives.

**2.** Procédé selon la revendication 1, **caractérisé en ce que** les éléments de charge sont de préférence des éléments de charge ohmiques dans respectivement un circuit de courant charge électriquement indépendant, et sont alimentés à partir d'une ligne d'alimentation commune, en particulier un réseau de bord de véhicule automobile.

**3.** Procédé selon la revendication 1, **caractérisé en ce qu'**une cadence de système commune est totalisée dans un compteur commun jusqu'à une valeur de fin de compteur prédéfinie.

**4.** Procédé selon une des revendications précédentes, **caractérisé en ce que**, pour des situations de fonctionnement différentes, des déphasages différents des différents éléments de charge entre eux sont prédéfinis.

**5.** Procédé selon une des revendications précédentes, **caractérisé en ce que** au moins un des paramètres suivants est détecté :

- nombres d'éléments de charge à commander actuellement, ou
- durée d'impulsion des éléments de charge à commander actuellement, ou
- puissance électrique absorbée ou grandeur, qui lui est proportionnelle, des éléments de charge à commander actuellement les uns par rapport aux autres, ou
- proportion d'harmoniques sur la ligne d'alimentation commune dans le temps pendant la commande de tous les éléments de charge.

**6.** Procédé selon une des revendications précédentes, **caractérisé en ce que** des moyens lumineux, en particulier des lampes ou des DEL, de préférence dans un véhicule automobile, sont commandés.

**7.** Circuit de commande pour la réalisation du procédé selon une des revendications 1 à 6, composé de :

- un générateur de cadence de système commun et
- une zone de mémoire pour chaque élément de charge, dans laquelle la durée d'impulsion ainsi que la position de phase de l'élément de charge respectif sont mises en mémoire.

**8.** Circuit de commande selon la revendication 7, **caractérisé en ce que**

- la valeur de début et la valeur de fin pour la commande à modulation de durée d'impulsions avec décalage de phases sont mises en mémoire,
- il est prévu un compteur commun, qui compte la cadence de système jusqu'à une valeur de fin de compteur prédéfinie,
- pour chaque élément de charge, il est prévu une zone de mémoire dans laquelle la valeur de début et la valeur de fin pour la commande à modulation de durée d'impulsions à décalage de phases sont mises en mémoire et
- pour chaque élément de charge, il est prévu un comparateur et un commutateur, le comparateur comparant l'état de comptage avec la valeur de début et de fin et commandant en fonction de cela respectivement le commutateur dans le circuit conduisant à l'élément de charge.

9. Circuit de commande selon la revendication 8, **caractérisé en ce que**, sur le compteur, il est prévu une entrée de reset qui permet de synchroniser en commun la commande pour tous les éléments de charge par le fait que le compteur est remis à zéro et relancé.

10. Circuit de commande selon une des revendications 7 à 9 pour la réalisation d'un procédé selon une des revendications 5 ou 6, **caractérisé en ce que**

   - il est prévu une zone de mémoire dans laquelle, pour différentes situations de fonctionnement, différentes positions de phase des différents éléments de charge les uns par rapport aux autres sont mises en mémoire, et **en ce qu'**il est prévu des moyens de détection de la situation de fonctionnement actuelle et de sélection de la position de phase affectée à la situation de fonctionnement actuelle.

11. Circuit de commande selon la revendication 10, **caractérisé en ce qu'**il est prévu une zone de mémoire dans laquelle une multiplicité de différentes positions de phase des différents éléments de charge les uns par rapport aux autres est programmable par le biais d'une interface.

12. Circuit de commande selon une des revendications précédentes, **caractérisé en ce qu'**un dispositif de mesure est prévu pour la détection des proportions d'harmoniques dans la ligne d'alimentation commune.

Stand der Technik

Ch.1
Ch.2
Ch.3
Ch.4

total

0°    90°   180°   270°    0°

# Fig. 1

# Fig.2

Ch.1
Ch.2
Ch.3
Ch.4

total

0°    90°   180°   270°    0°

Fig.3

**Stand der Technik**

**Fig.4a**
(16 Phasen mit 50% Duty Cycle )

**Fig.4b**

**Fig.5a**

(Multiphasing mit 16 Phasen mit 50% Duty Cycle)

**Fig.5b**

**Fig.6a**
(Multiphasing mit 9 Phasen mit 50% Duty Cycle)

**Fig.6b**

**Fig.7a**

(Multiphasing mit 9 Phasen mit 60% Duty Cycle)

**Fig.7b**

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0982194 A2
- US 4176250 A